**Europäisches Patentamt**

**European Patent Office**

**Office européen des brevets**

(11) Veröffentlichungsnummer: **0 139 862**
**B1**

(12) **EUROPÄISCHE PATENTSCHRIFT**

(45) Veröffentlichungstag der Patentschrift:
**11.05.88**

(21) Anmeldenummer: **84108129.2**

(22) Anmeldetag: **11.07.84**

(51) Int. Cl.⁴: **G 01 N 1/24, F 04 B 43/08**

(54) Luftförderer für Gasprüfröhrchen.

(30) Priorität: **22.08.83 DE 3330578**

(43) Veröffentlichungstag der Anmeldung:
**08.05.85 Patentblatt 85/19**

(45) Bekanntmachung des Hinweises auf die Patenterteilung:
**11.05.88 Patentblatt 88/19**

(84) Benannte Vertragsstaaten:
**BE FR GB IT NL SE**

(56) Entgegenhaltungen:
**DE - B - 1 007 523**
**DE - B - 1 598 332**
**DE - B - 2 143 282**
**DE - C - 962 207**
**DE - U - 1 821 050**

(73) Patentinhaber: **AUERGESELLSCHAFT GMBH,**
**Thlemannstrasse 1, D-1000 Berlin 44 (DE)**

(72) Erfinder: **Molt, Werner, Wullenweberstrasse 10,**
**D-1000 Berlin 21 (DE)**

## Beschreibung

Die Erfindung bezieht sich auf einen Luftförderer für Gasprüfröhrchen gemäss dem Oberbegriff des Anspruches 1.

Bei einem bekannten gattungsgemässen Luftförderer für Gasprüfröhrchen wird das zu untersuchende Gas mit Hilfe eines als Gummiballpumpe ausgebildeten Saugelementes durch das Gasprüfröhrchen gesaugt, wobei die Luft beim Zusammendrücken des Gummiballs durch das Luftauslassventil nach aussen entweicht, während die Luft beim Entspannen des Gummiballes durch das Gasprüfröhrchen angesaugt wird. Dieser bekannte Luftförderer hat den Nachteil, dass die Fördermenge bei jeder Betätigung des Gummiballes unterschiedlich ist, da sie von der unterschiedlichen Art des Zusammendrückens des Gummiballes abhängig ist. Auch hat die Saugkurve des Gummiballs eine Unstetigkeitsstelle, bei welcher eine grosse Menge an Luft angesaugt wird.

Es ist zwar bereits aus der DE-PS 1 007 523 ein Luftförderer für Gasprüfröhrchen bekannt, bei welchem zur Vermeidung der Unstetigkeit der Luftfördermenge als Saugelement anstelle der Gummiballpumpe ein Faltenbalg verwendet wird, welcher zwischen zwei Griffplatten angeordnet ist, die gegen die Wirkung zweier im Faltenbalg angeordneter Druckfedern von einer Hand der Bedienungsperson zusammengedrückt werden müssen, um den Faltenbalg zu entlüften und in seine Saugstellung zu bringen. Dabei besteht jedoch die Gefahr, dass die beiden Griffplatten nicht vollständig oder unter einem Winkel zueinander zusammengedrückt werden, so dass keine vollständige Entlüftung des Faltenbalges erfolgt und somit auch bei diesem Luftförderer die Fördermenge bei jeder Betätigung unterschiedlich ist. Ausserdem besteht die Gefahr, dass der Luftförderer bei der einhändigen Bedienung unter Wirkung der Druckfedern der Bedienungsperson aus der Hand rutschen kann.

Die beschriebenen Luftförderer für Gasprüfröhrchen müssen für eine Prüfung mehrmals betätigt werden, da mehrmals Gas durch das Gasprüfröhrchen durchgesaugt werden muss. Hierzu sieht der gattungsgemässe Luftförderer den Zählring vor. Dieser ist eine reine Merkhilfe für die mit der Gummiballpumpe ausgeführte Hubzahl, so dass es leicht zu Fehlzählungen kommen kann, ohne dass die eingestellte Zahl von Saughüben durchgeführt worden ist. Bei dem gattungsfremden Luftförderer ist es zwar ebenfalls bekannt, einen Hubzähler anzuordnen, welcher beim Zusammendrücken der beiden Greifplatten betätigt wird. Da diese jedoch insbesondere bei der einhändigen Bedienung nicht zwangsläufig parallel geführt werden, kann es vorkommen, dass der Hubzähler nicht von der die Zählung bewirkenden Greifplatte betätigt wird. Auch kann aufgrund des schaukelartig bewegbaren Faltenbalges der Hubzähler ausgelöst werden, ohne dass ein korrekter Saughub ausgelöst ist, d.h. der durchgeführte Saughub entspricht nicht dem vollen Saugvolumen des Faltenbalges. Auch kann der Saughub insbesondere bei der einhändigen Bedienung von Hand gebremst werden, da die beiden Greifplatten in der Hand gehalten werden müssen.

Für eine genaue Messung ist bei jedem Hub das gleiche Saugvolumen ausschlaggebend. Dieses wird sowohl beim Saugball als auch beim bekannten Faltenbalg nicht erreicht, die beide nur auf Anschlag gefahren werden. Ferner muss die Saugcharakteristik bei jedem Saughub gleich sein. Dies wird bei den bekannten Luftförderern nicht erreicht, da z.B. beim Luftförderer gemäss der DE-PS 1 007 523 zum Entspannen des Faltenbalges der Handgriff mit den beiden Greifplatten vollständig freigegeben werden muss, um keine Bremsung der auseinanderbewegten Greifplatten zu bewirken. Sobald eine Bremsung der Bewegung der Greifplatten erfolgt, wird kein konstanter Saugdruck erzielt und das Messergebnis verfälscht. Schliesslich ist es erforderlich, dass für jede Messung die gleiche Zeit für den Saughub vergeht. Bei einer Behinderung des Saughubes durch nicht vollständiges Freigeben des Faltenbalges kommt es ebenfalls zu Fehlmessungen.

Der Erfindung liegt die Aufgabe zugrunde, einen Luftförderer für Gasprüfröhrchen der gattungsgemässen Art zu schaffen, der ein vollständiges, genau definiertes und nicht manipulierbares Ausblasen der Luft aus dem Saugelement erfordert, bevor ein Saughub ausgeführt werden kann, der Fehlzählungen der einzelnen aufeinanderfolgenden Saugvorgänge vermeidet und der ein stetiges, freies Arbeiten des Saugelementes mit stetiger Saugleistung, gleicher Saugcharakteristik und gleicher Saugzeit ermöglicht.

Die Lösung dieser Aufgabe ergibt sich aus den Merkmalen des Anspruches 1. Erfindungsgemäss ist die Bodenplatte über die im Durchgangskanal des Gerätekörpers geführte Steuerstange mit dem Zählring gekoppelt, wobei der Faltenbalg in seiner entlüfteten Stellung arretierbar und zum Auslösen des Saughubes durch eine Drehung des Zählringes entriegelbar ist. Durch die Arretierung des Faltenbalges erfolgt eine eindeutige Zuordnung der Entlüftungsstellung des Faltenbalges. Der Saughub für eine Messung wird durch eine Drehung des Zählringes ausgelöst, wodurch dieser mit der Betätigung des Faltenbalges gekoppelt ist. Der Faltenbalg wird vor der Messung mittels der Steuerstange arretiert. Hierdurch hat die Bedienungsperson Zeit, den Messvorgang durch Auslösen der Steuerstange, d.h. durch eine Drehung des Zählringes einzuleiten. Somit ist eine gekoppelte Verbindung zwischen der Anzahl der Saughübe des Faltenbalges und der am Zählring angezeigten Saughübe gegeben. Die Stetigkeit des Saughubes wird dabei durch die Verwendung des Faltenbalges als Saugelement bewirkt.

Schliesslich ermöglicht die Ausbildung des Gerätekörpers als Handgriff eine leichte Einhandbedienung, da der um die Gerätekörperachse drehbare Zählring mittels Daumen und Zeigefinger der Haltehand der Bedienungsperson betätigt werden kann.

Eine besonders vorteilhafte Ausbildung der Arretiereinrichtung für die Steuerstange ergibt sich aus den Merkmalen der Ansprüche 6 und 7. Gemäss Anspruch 9 ist noch ein Sichtfenster im Gerätekörper vorgesehen, in welchem bei voll belüftetem Faltenbalg eine Markierung sichtbar wird, die an der Steuerstange angebracht ist. Die Steuerstange ist im übrigen exzentrisch im Gerätekörper angeordnet, um die Einrichtung zur Arretierung der Steuerstange und den Zählring mit Sperrelement bei im Querschnitt möglichst handlichem Gerätekörper von z.B. 42 mm Durchmesser unterbringen zu können.

Die Erfindung ist nachfolgend anhand eines in den Zeichnungen dargestellten Ausführungsbeispieles näher erläutert. Es zeigen:

Fig. 1 einen Längsschnitt durch den Luftförderer mit voll belüftetem Faltenbalg,

Fig. 2 einen Längsschnitt durch den Luftförderer in entlüftetem Zustand des Faltenbalges bei arretierter Steuerstange,

Fig. 3 einen Querschnitt durch den Grundkörper des Luftförderers im Bereich des Zählringes und der unterhalb desselben angeordneten Einrichtung zur Arretierung der Steuerstange und

Fig. 4 eine Ansicht des Luftförderers bei voll belüftetem Faltenbalg.

Der Luftförderer für Gasprüfröhrchen 1, die zum Nachweis fremder Gase oder Schwebstoffe in Luft dienen, besteht aus einem Gerätekörper 2 aus Kunststoff mit einem Durchgangskanal 3, einem als Faltenbalg 4 ausgebildeten Saugelement, einer Steuerstange 5 sowie einem Zählring 6 mit diesem zugeordneter Einrichtung 7 zum Arretieren der Steuerstange 5.

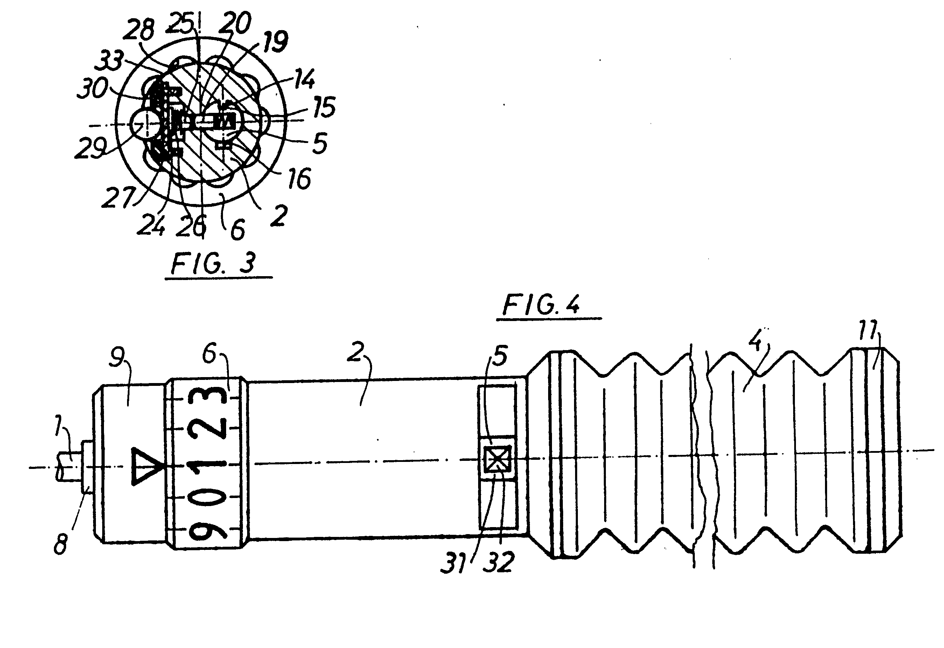

Der Durchgangskanal 3 ist exzentrisch im Gerätekörper 2 angeordnet, wie es insbesondere in Fig. 3 ersichtlich ist. Der Durchgangskanal 3 weist an seinem einen Ende einen Dichtungseinsatz 8 aus gummielastischem Material für das Gasprüfröhrchen 1 auf. Eine Überwurfmutter 9 aus Kunststoff hält den Einsatzkörper 8 und den Zählring 6 am Gerätekörper 2 fest. Ferner ist am anderen Ende des Durchgangskanales 3 an der Stirnseite 10 des Gerätekörpers 2 der Faltenbalg 4 aus gummielastischem Material fest angeflanscht. Der Faltenbalg 4 ist mit einer Bodenplatte 11 versehen, in welcher ein Luftauslassventil 12 angeordnet ist. Das Ventil 12 dient zum Ausblasen der Luft beim Zusammendrücken des Faltenbalges 4, das Ventil 12 ist bei einem Saughub des Faltenbalges 4 geschlossen. Um die Steuerstange 5 herum erstreckt sich innerhalb des Faltenbalges 4 eine zylindrische Druckfeder 13, die sich an der Bodenplatte 11 des Faltenbalges und der dieser gegenüberliegenden Stirnfläche 10 des Gerätekörpers 2 abstützt. Der Faltenbalg 4 ist im Querschnitt kreisförmig ausgebildet. Sein Durchmesser entspricht im wesentlichen dem Durchmesser des als Handgriff ausgebildeten Gerätekörpers 2, dessen Durchmesser und Länge derart ausgebildet ist, dass eine menschliche Hand den Gerätekörper 2 zwischen dem Zählring 6 und der Stirnfläche 10 leicht umfassen und den Zählring 6 mit dem Daumen und dem Zeigefinger betätigen kann. Die mit der Bodenplatte 11 fest verbundene, insbesondere einstückig mit dieser ausgebildete Steuerstange 5 ist im Durchgangskanal 3 gleitbar geführt, wobei diese unter einer Gleitpassung untereinander angepasst sind. Zur Verdrehsicherung ist eine Längsnut 14 in der Steuerstange 3 angebracht, welche von einem Längssteg 15 geführt wird, der aus der Wandung des Durchgangskanales 3 hervorsteht. Über die gesamte Länge des Durchgangskanales 3 erstreckt sich eine Längsnut 16 in dessen Wandung, welche als Gaskanal zur ständigen Verbindung des Innenraumes des Faltenbalges 4 mit der Öffnung des Dichteinsatzes 8 für das Gasprüfröhrchen 1 dient.

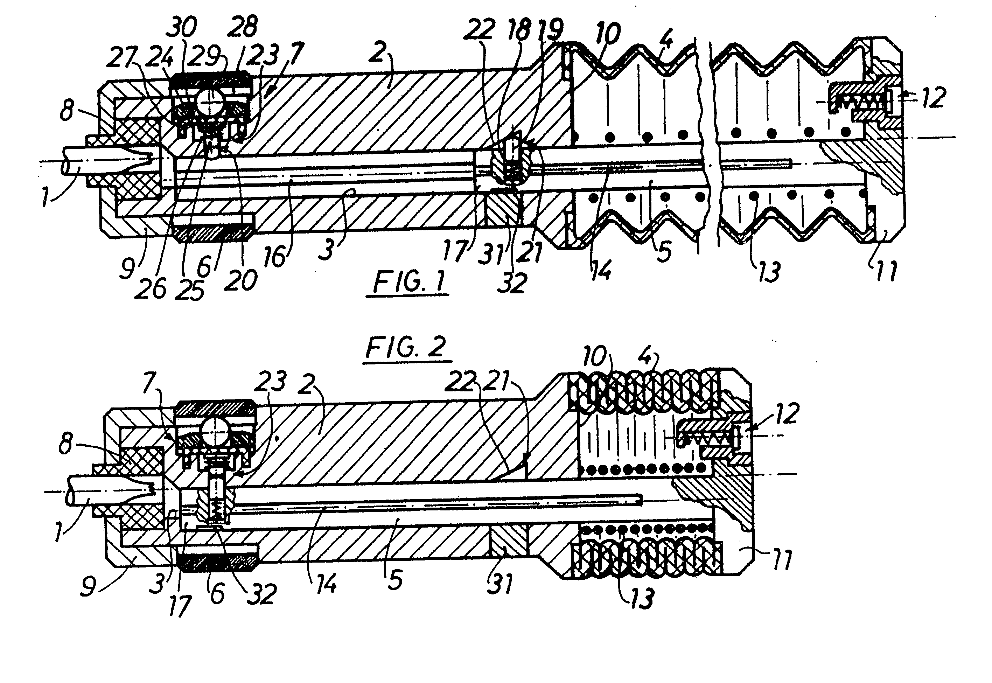

Die Steuerstange 5 ist an ihrem freien Ende 17 mit einer radialen Bohrung 18 zur Aufnahme eines radial gerichteten, federbelasteten Sperrnockens 19 versehen. Für beide Endstellungen der Steuerstange 5, welche in den Figuren 1 und 2 dargestellt sind, sind in der Wandung des Durchgangskanales radiale Rastausnehmungen 20, 21 angeordnet. Bei voll belüftetem Faltenbalg 4 (Fig. 1) greift somit der Sperrnocken 19 in die Rastausnehmung 21 ein, welche in der Nähe der Stirnseite 10 des Gerätekörpers 2 angeordnet ist. Diese Rastausnehmung 21 weist eine in Richtung zur Rastausnehmung 20 ansteigende Schrägfläche 22 auf, welche ein Lösen dieser Raststellung zum Entlüften des Faltenbalges 4 leicht ermöglicht.

In der weiteren Rastausnehmung 20, welche unterhalb des Zählringes 6 als Radialbohrung angeordnet ist, ist das federbelastete Sperrelement 23 des Zählringes 6 radial beweglich geführt. Dieses besteht aus einem mit einem Teller 24 versehenen Stift 25, um welchen eine Feder 26 als radial auswärts gerichtete Druckfeder angeordnet ist. Der Teller 24 stützt sich gegen eine Gummidichtung 27 ab, welche napfförmig das Sperrelement 23 umgibt und somit den Durchgangskanal 3 nach aussen hin abdichtet. Der Zählring 6 ist auf seiner Unterseite mit Kugelrasten 28 versehen, welchen auf der Aussenseite je eine Ziffer von 1 bis 10 angeordnet ist. In einer der Kugelrasten 28 ist eine Sperrkugel 29 angeordnet, die von einem in den Gerätekörper 2 eingeschraubten Kugelführungsring 30 umgeben ist.

Im Bereich der radialen Rastausnehmung 21 für die Endstellung der Steuerstange 5 bei belüftetem Faltenbalg 4 ist ein Sichtfenster 31 gasdicht in die Wandung des Gerätekörpers 2 eingesetzt. Die Steuerstange 5 trägt am freien Ende 17 auf ihrer dem Sperrnocken 19 gegenüberliegenden Seite Markierungen 32, die bei voll belüftetem Faltenbalg 4 mit dem Sichtfenster 31 in Deckung sind (Fig. 1 und 4).

Der beschriebene Luftförderer für Gasprüfröhrchen 1 arbeitet wie folgt:

In der in Fig. 1 dargestellten Ausgangsstellung ist der Faltenbalg 4 voll belüftet. Ein Gasprüfröhrchen 1 ist in den Dichteinsatz 8 eingesetzt. Der als Handgriff dienende Gerätekörper 2 wird von der Bedienungsperson in eine Hand genommen und gegen einen festen Körper oder den Oberschenkel der Bedienungsperson mit der Bodenplatte 11 des Faltenbalges 4 gedrückt, woraufhin der Faltenbalg 4 entlüftet wird. Die Luft entweicht durch das Luftauslassventil 12. Dabei wird der Sperrnocken 19 aus der Rastausnehmung 21 aufgrund der Schrägfläche 22 leicht herausgedrückt. Die Steuerstange 5 gleitet im Durchgangskanal 3. Bei Erreichen der Endstellung rastet der Sperrnocken 19 in der Rastausnehmung 20 ein (Fig. 2). Hierdurch wird der Bedienungsperson angezeigt, dass der Faltenbalg 4 vollständig entlüftet ist. Durch eine Drehung des Zählringes 6 wird bewirkt, dass die Sperrkugel 29 durch zwischen den Rasten 28 angeordnete radiale Stege 33 gegen das federbelastete Sperrelement 23 gedrückt wird, welches wiederum gegen den Sperrnocken 19 in der Steuerstange 5 drückt. Dieser wird aus seiner Rastnehmung 20 herausgedrückt, woraufhin der Faltenbalg 4 unter Wirkung der Druckfeder 13 betätigt wird. Durch das Gasprüfröhrchen 1 wird nun Luft durch den Durchgangskanal 3 bzw. die parallel hierzu verlaufende Längsnut 16 in den Innenraum des Faltenbalges 4 gesogen, wobei das Luftauslassventil 12 geschlossen ist. Bei stetigem, nur von der Kennlinie der Druckfeder 13 abhängigem Saughub wird nun ein genau bestimmtes Luftvolumen durch das Gasprüfröhrchen 1 durchgezogen. Dies erfolgt solange, bis die Markierung 32 in Deckung mit dem Sichtfenster 31 gebracht ist, wobei der Sperrnocken 19 in seine Rastausnehmung 21 geführt ist. Hierbei kann die Bedienungsperson erkennen, dass der Hub des Faltenbalges 4 beendet ist.

Der erfindungsgemässe Luftförderer für Gasprüfröhrchen 1 hat bei jedem Saughub des Faltenbalges 4 das gleiche Saugvolumen, die gleiche Saugcharakteristik und die gleiche Saugzeit. Es wird bei jedem Saughub die gleiche Menge Gas durch das Gasprüfröhrchen 1 gesogen und zwar in gleicher Zeit mit wiederholbarer Geschwindigkeitscharakteristik. Dabei erfolgt eine Verrastung der Steuerstange 5 unmittelbar im Gasmedium. Der Luftförderer kann insbesondere in vorgespanntem, messbereitem Zustand gemäss Fig. 2 an eine Messstelle gehalten werden, die mit herkömmlichen Geräten wegen der unmittelbaren Betätigung am Messort nicht zugänglich ist. Der in der Länge veränderliche Gaskanal 3,16 hat einen positiven Einfluss auf die Saugcharakteristik, indem der abnehmende Saugwiderstand des Gaskanals 3,16 der Charakteristik der Feder 13 im Faltenbalg 4 entgegenwirkt.

## Patentansprüche

1. Luftförderer für Gasprüfröhrchen zum Nachweis fremder Gase oder Schwebestoffe in Luft, mit einem Gerätekörper (2) mit einem Durchgangskanal (3), an dessen einem Ende ein Dichteinsatz zur Aufnahme des Gasprüfröhrchens und an dessen anderem Ende ein Saugelement (4) mit einem Luftauslassventil (12) angeordnet sind, sowie mit einem um die Gerätekörperachse drehbaren, durch ein federbelastetes Sperrelement (23) arretierbaren Zählring (6), dadurch gekennzeichnet, dass der Gerätekörper (2) als Handgriff und das Saugelement als Faltenbalg (4) ausgebildet ist, dessen Bodenplatte (11) mit einer im Durchgangskanal (3) geführten Steuerstange (5) verbunden ist, die bei entlüftetem Faltenbalg (4) arretierbar und zum Auslösen des Saughubes des Faltenbalges (4) durch eine Drehung des Zählringes (6) entriegelbar ist.

2. Luftförderer nach Anspruch 1, dadurch gekennzeichnet, dass der Faltenbalg (4) im Querschnitt kreisförmig mit einem dem als Handgriff ausgebildeten Gerätekörper (2) entsprechenden Durchmesser ausgebildet ist.

3. Luftförderer nach Anspruch 1 oder 2, dadurch gekennzeichnet, dass der Faltenbalg (4) mit mindestens einer sich um die Steuerstange (5) herum erstreckenden zylindrischen Druckfeder (13) versehen ist, die sich an der Bodenplatte (11) und der dieser gegenüberliegenden Stirnfläche (10) des Gerätekörpers (2) abstützt.

4. Luftförderer nach einem der Ansprüche 1 bis 3, dadurch gekennzeichnet, dass das Luftauslassventil (12) des Faltenbalges (4) in der Bodenplatte (11) angeordnet ist.

5. Luftförderer nach einem der vorangegangenen Ansprüche, dadurch gekennzeichnet, dass die Steuerstange (5) formschlüssig im Durchgangskanal (3) geführt ist und dass in der Wandung des Durchgangskanals (3) eine Längsnut (16) als Gaskanal angeordnet ist.

6. Luftförderer nach einem der vorangegangenen Ansprüche, dadurch gekennzeichnet, dass die Steuerstange (5) an ihrem freien Ende (17) mit einer radialen Bohrung (18) zur Aufnahme eines radial gerichteten, federbelasteten Sperrnockens (19) versehen ist und dass in der Wandung des Durchgangskanals (3) für beide Endstellungen der Steuerstange (5) radiale Rastausnehmungen (20, 21) angeordnet sind.

7. Luftförderer nach Anspruch 6, dadurch gekennzeichnet, dass das federbelastete Sperrelement (23) für den Zählring (6) in der radialen Rastausnehmung (20) des federbelasteten Sperrnockens (19) für die Steuerstange (5) bei entlüftetem Faltenbalg (4) radial beweglich gelagert ist und dass der auf seiner Unterseite mit Kugelrasten (28) versehene Zählring (6) über eine Sperrkugel (29) mit dem Sperrelement (23) in Wirkverbindung steht.

8. Luftförderer nach Anspruch 7, dadurch gekennzeichnet, dass zwischen der Sperrkugel (29) und dem Sperrelement (23) eine zum Gaskanal (3, 16) abdichtende Gummidichtung (27) eingesetzt ist.

9. Luftförderer nach Anspruch 6, dadurch gekennzeichnet, dass im Bereich der radialen Rastausnehmung (20) für die Endstellung der Steuerstange (5) bei belüftetem Faltenbalg (4) ein Sichtfenster (31) gasdicht in die Wandung des Gerätekörpers (2) eingesetzt ist und dass die Steuerstange (5) am freien Ende (17) auf der dem Sperrnocken (19) gegenüberliegenden Seite Markierungen (32) trägt, die bei voll belüftetem Faltenbalg (4) mit dem Sichtfenster (31) in Deckung sind.

10. Luftförderer nach einem der vorangegangenen Ansprüche, dadurch gekennzeichnet, dass die Steuerstange (5) exzentrisch im Gerätekörper (2) angeordnet ist.

## Claims

1. An air conveyor for gas testing tubes for detecting foreign gases or suspended matter in air, with an instrument body (2) with a through duct (3), at the one end of which a sealing insert for the reception of the gas testing tube is arranged and at the other end of which a suction element (4) with an air outlet valve (12) is arranged, and with a counting ring (6) which is rotatable about the axis of the instrument body and which is lockable by a spring-loaded stop element (23), characterised in that the instrument body (2) is designed as a handle and the suction element is designed as a bellows (4), the base plate (11) of which is connected to a control rod (5) which is guided in the through duct (3) and which is lockable when the bellows (4) is contracted and is unlockable by a rotation of the counting ring (6) to release the suction stroke of the bellows (4).

2. An air conveyor according to claim 1, characterised in that the bellows (4) is of circular design in cross-section with a diameter corresponding to the instrument body (2) which is designed as a handle.

3. An air conveyor according to claim 1 or 2, characterised in that the bellows (4) is provided with at least one cylindrical compression spring (13) which extends around the control rod (5) and which is supported against the base plate (11) and that end surface (10) of the instrument body (2) which lies opposite thereto.

4. An air conveyor according to one of claims 1 to 3, characterised in that the air outlet valve (12) of the bellows (4) is arranged in the base plate (11).

5. An air conveyor according to one of the preceding claims, characterised in that the control rod (5) is guided in form-locking manner in the through duct (3) and in that a longitudinal groove (16) is arranged as the gas duct in the wall of the through duct (3).

6. An air conveyor according to one of the preceding claims, characterised in that the control rod (5) is provided at its free end (17) with a radial bore (18) for the reception of a radially-directed spring-loaded stop dog (19) and in that for both end positions of the control rod (5) radial detent recesses (20, 21) are arranged in the wall of the through duct (3).

7. An air conveyor to claim 6, characterised in that the spring-loaded stop element (23) for the counting ring (6) is mounted so as to be movable radially in the radial detent recess (20) of the spring-loaded stop dog (19) for the control rod (5) when the bellows (4) is contracted and in that the counting ring (6) which is provided with ball notches (28) on its lower side stands in operative communication with the stop element (23) by way of a stop ball (29).

8. An air conveyor according to claim 7, characterised in that a rubber seal (27) which seals with regard to the gas duct (3, 16) is inserted between the stop ball (29) and the stop element (23).

9. An air conveyor according to claim 6, characterised in that in the region of the radial detent recess (20) for the end position of the control rod (5) when the bellows (4) is expanded a viewing window (31) is inserted in a gastight manner into the wall of the instrument body (2) and in that the control rod (5) carries at the free end (17) on the side lying opposite to the stop dog (19), markings (32) which are in register with the viewing window (31) when the bellows (4) is fully expanded.

10. An air conveyor according to one of the preceding claims, characterised in that the control rod (5) is arranged eccentrically in the instrument body (2).

## Revendications

1. Appareil pour faire passer de l'air par de petits tubes détecteurs de gaz en vue du décèlement de gaz étrangers ou de matières étrangères en suspension dans l'air, comprenant un corps (2) avec un canal de passage (3), à une extrémité duquel est disposée une pièce insérée d'étanchéité destinée à recevoir le petit tube détecteur de gaz et à l'autre extrémité duquel est disposé un élément d'aspiration muni d'une soupape d'échappement d'air (12), ainsi qu'une bague de comptage (6) immobilisable par un élément de blocage (23) chargé par ressort, caractérisé en ce que le corps (2) de l'appareil est réalisé comme un manche et l'élément d'aspiration est un soufflet (4) dont la plaque de fond (11) est reliée à une tige de commande (5) guidée dans le canal de passage (3), qui est immobilisée quand le soufflet (4) est vidé d'air et est libérée par une rotation de la bague de comptage (6) pour déclencher la course d'aspiration du soufflet (4).

2. Appareil selon la revendication 1, caractérisé en ce que le soufflet (4) possède une section circulaire dont le diamètre correspond à celui du corps (2) constituant le manche.

3. Appareil selon la revendication 1 ou 2, caractérisé en ce que le soufflet (4) est pourvu d'au moins un ressort cylindrique de compression (13) enfilé autour de la tige de commande (5) et s'appuyant sur la plaque de fond (11) et sur la face d'extrémité (10) située en face de ce fond sur le corps (2) de l'appareil.

4. Appareil selon une des revendications 1 à 3, caractérisé en ce que la soupape d'échappement d'air (2) du soufflet (4) est incorporée dans la plaque de fond (11).

5. Appareil selon une des revendications précédentes, caractérisé en ce que la tige de commande (5) est guidée à complémentarité de formes dans le canal de passage (3) et qu'une rainure longitudinale (16) est ménagée en tant que canal de gaz dans la paroi du canal de passage (3).

6. Appareil selon une des revendications précédentes, caractérisé en ce que la tige de commande (5) présente à son extrémité libre (17) un trou radial (18) recevant une pièce d'arrêt (19) orientée radialement et chargée par un ressort et que des crans d'arrêt (20, 21) radiaux sont prévus pour les deux positions de fin de course de la tige de commande (5) dans la paroi du canal de passage (3).

7. Appareil selon la revendication 6, caractérisé en ce que l'élément de blocage (23), chargé par ressort, pour la bague de comptage (6) est disposé radialement mobile dans le cran d'arrêt radial (20) de la pièce d'arrêt (19), chargée par ressort, pour la tige de commande (5) à l'état vidé d'air du soufflet (4) et que la bague de comptage (6), pourvue de crans (26) pour une bille sur son côté inférieur, est en liaison de commande avec l'élément de blocage (23) par une bille d'arrêt (29).

8. Appareil selon la revendication 7, caractérisé en ce qu'un joint en caoutchouc (27), assurant l'étanchéité du canal de gaz (3, 16), est disposé entre la bille d'arrêt (29) et l'élément de blocage (23).

9. Appareil selon la revendication 6, caractérisé en ce qu'un voyant (31) est monté étanche au gaz dans la paroi du corps (2) dans la région du cran radial (20) pour la position de fin de course de la tige de commande (5) correspondant au remplissage du soufflet (4) avec de l'air et que la tige de commande (5) porte à son extrémité libre (17), sur le côté opposé à la pièce d'arrêt (19), des repères (32) qui apparaissent derrière le voyant (31) quand le soufflet (4) est complètement rempli d'air.

10. Appareil selon une des revendications précédentes, caractérisé en ce que la tige de commande (5) est disposée de façon excentrée dans le corps (2) de l'appareil.

FIG.1

FIG.2

FIG. 3

FIG. 4